Europäisches Patentamt

European Patent Office

Office européen des brevets

(19)

(11) Publication number: **0 072 124**
**B1**

# EUROPEAN PATENT SPECIFICATION

(45) Date of publication of patent specification: **05.03.86**

(51) Int. Cl.⁴: **G 02 F 1/03,** G 02 F 1/19, G 03 G 15/30

(21) Application number: **82303872.4**

(22) Date of filing: **22.07.82**

(54) **Light-modulating device comprising a multigate light valve.**

(30) Priority: **03.08.81 US 289447**

(43) Date of publication of application: **16.02.83 Bulletin 83/07**

(45) Publication of the grant of the patent: **05.03.86 Bulletin 86/10**

(84) Designated Contracting States: **DE FR**

(56) References cited:
EP-A-0 021 754
US-A-4 125 318
US-A-4 243 300

APPLIED OPTICS, Vol.21, No.5, March 1, 1982, G. ARRIDSSON, L.THYLEN "Electro-optic integrated optics spectrum analyzer: an experimental in restigation", pages 797-803.

DESIGN NEWS, February 4, 1980, "Data recorder eliminates problem of linearity", pages 56,57.

ELECTRONIC DESIGN 15, July 19, 1979, "Light gates give data recorder improved hardcopy resolution", pages 31,32.

(73) Proprietor: **XEROX CORPORATION**
**Xerox Square - 020**
**Rochester New York 14644 (US)**

(72) Inventor: **Sprague, Robert A.**
**13755 Calle Tacuba**
**Saratoga California 95070 (US)**

(74) Representative: **Weatherald, Keith Baynes et al**
**European Patent Attorney Rank Xerox Limited**
**Patent Department 338 Euston Road**
**London NW1 3BH (GB)**

Courier Press, Leamington Spa, England.

# Description

This invention relates to fringe field responsive multigate light valves and, more particularly, to methods and means for increasing the uniformity of the optical output of such light valves.

As is known, an electro-optic element having a plurality of individually addressable electrodes may be employed as a multigate light valve in, say, an electro-optic line printer. "Light Gates Give Data Recorder Improved Hardcopy Resulution," *Electronic Design*, July 19, 1979, pp. 31—32; "Polarizing Filters Plot Analog Waveforms," *Machine Design*, Vol. 51, No. 17, July 26, 1979, p. 62; and "Data Recorder Eliminates Problems of Linearity," *Design News*, February 4, 1980, ppl 56—57. EP—A—21754 also forms part of the prior art.

Substantial progress has been made in developing such light valves and in applying them to electro-optic line printing. However, one of the issues which has not yet been addressed is the problem of obtaining a substantially uniform optical output across the full width of a multigate light valve. Undesirable variations may occur in the output of such a light valve because of system irregularities, such as non-uniform illumination of the light valve and vignetting in the imaging optics, and elemental irregularities, such as variations in the electrode spacing and in the electrode drive electronics. Furthermore, some of the optical variations are predictable, while others can be ascertained only by actual measurement.

In accordance with the present invention, there is provided a light-modulating device which is as claimed in the appended claims. To the extent that irregularities of the system and/or elements are predictable, the compensation may be provided by initially fabricating the electrodes to have lengths complementing the predicted optical output irregularities. Otherwise, the output irregularities are measured so that the electrodes may be trimmed as necessary to compensate for the non-uniformity. In any event, in keeping with this invention, the lengths of the electrodes vary widthwise of the electro-optic element in accordance with a function which is inversely related to the predicted or measured variations in its uncompensated or incompletely compensated optical output.

Still other features and advantages of this invention will become more clearly apparent when the following detailed description is read in conjunction with the attached drawings, in which:

Figure 1 is a schematic side view of an electro-optic line printer having a TIR multigate light valve embodying the present invention;

Figure 2 is an enlarged bottom plan view of a portion of the printer shown in Figure 1;

Figure 3 is an enlarged side view of the TIR light valve;

Figure 4 is an enlarged, cut-away, bottom view of the light valve shown in Figure 3 to illustrate the varying length electrodes that are provided in accordance with this invention to compensate for non-uniformities in the optical output of the light valve,

Figure 5 is a simplified block diagram of a system for applying differentially encoded input data samples to the electrodes of the light valve shown in Figure 5.

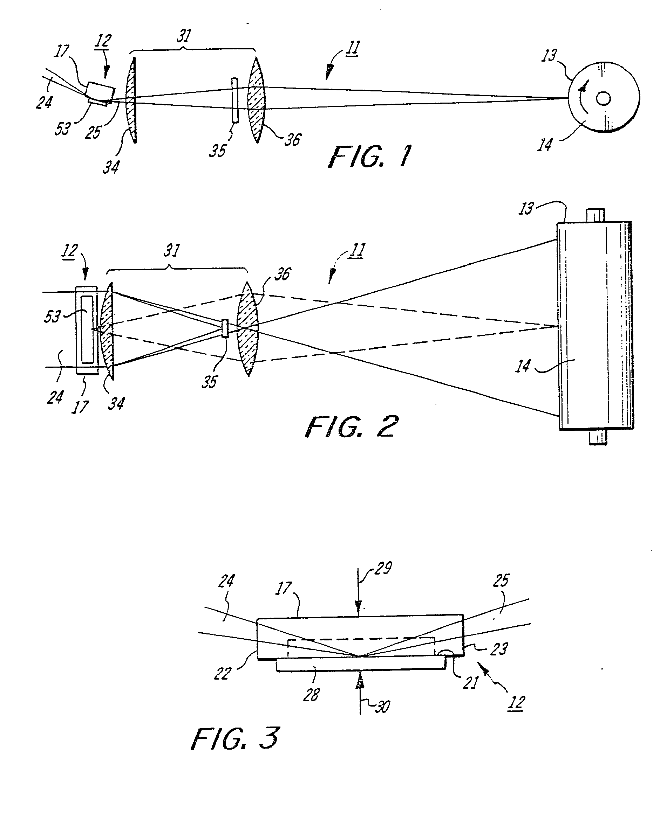

Turning now to the drawings, and at this point especially to Figures 1 and 2, there is an electro-optic line printer 11 having a fringe field responsive multigate light valve 12 for printing an image on a photosensitive recording medium 13. As shown, the recording medium 13 is a photoconductively coated drum 14 which is rotated (by means not shown) in the direction of the arrow. Nevertheless, it will be evident that there are other xerographic and non-xerographic recording media that could be used, including photoconductively coated belts and plates, as well as photosensitive films and coated papers. Thus, in the generalized case, the recording medium 13 should be visualized as being a photosensitive medium which is exposed while advancing in a cross line or line pitch direction relative to the light valve 12.

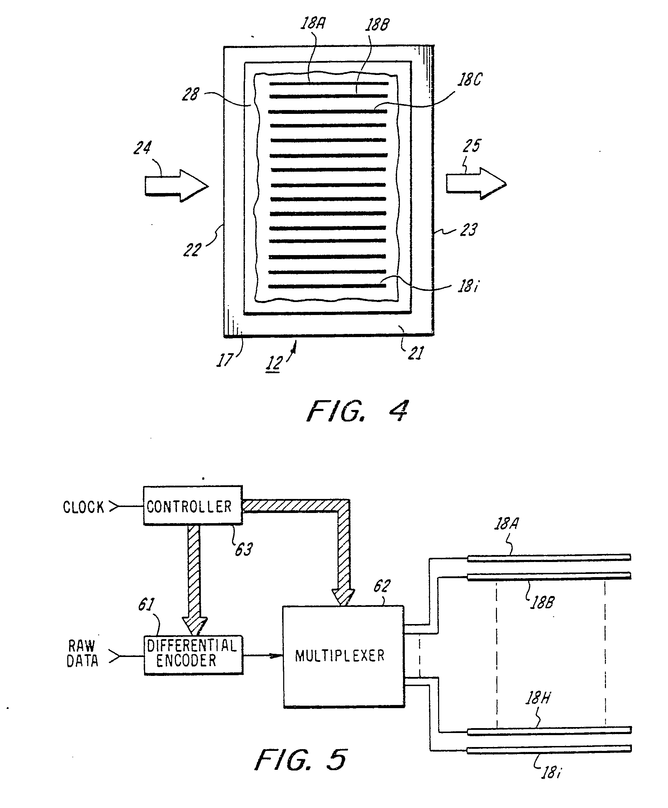

As best illustrated in Figure 3 and 4, the light valve 12 comprises an optically transparent electro-optic element 17 and a plurality of individually addressable electrodes 18a—18i. The most promising electro-optic materials for such a device presently appear to be $LiNbO_3$ and $LiTaO_3$, but there are others which warrant consideration including BSN, KDP, $KD^xP$, $Ba_2NaNb_5O_{15}$ and PLZT. In this particular embodiment, the light valve 12 is operated in a TIR mode. Consequently, the electro-optic element 17 is suitably a y-cut crystal of, say, $LiNbO_3$ having an optically polished reflecting surface 21 extending between opposed, optically polished input and output faces 22 and 23, respectively. Typically, each of the electrodes 18a—18i is 1—30 microns wide, and the interelectrode gap spacing is 1—30 microns.

In operation, as shown in Figs. 1—4, a sheet-like collimated light beam 24 is transmitted through the input face 22 of the electro-optic element 17 at a grazing angle of incidence relative to the reflecting surface 21 (i.e., an angle no greater than the critical angle of incidence for total internal reflectance from the reflecting surface 21). The input beam 24 is supplied by a suitable source, such as a laser, and is laterally expanded (by means not shown) so that it more or less uniformly illuminates substantially the full width of the electro-optic element 17. Furthermore, the input beam 24 is brought to a wedge shaped focus (by means also not shown) on the reflecting surface 21 approximately midway through the electro-optic element 17 and is totally internally reflected therefrom to provide an output beam 25 which exits from the electro-optic element 17 through its output face 23.

The phase front or the polarization of the output beam 25 is spatially modulated in accordance with the data applied to the electrodes 18a—18i. More particularly, if the data creates a voltage drop between any adjacent pair of electrodes, such as the electrodes 18b and 18c, a corresponding fringe field is coupled into the electro-optic element 17, thereby producing a localized variation in its refactive index. To efficiently couple such fringe fields into the electro-optic element 17, the electrodes 18a—18i are supported on or very near the reflecting surface 21 thereof. Indeed, as shown, the electrodes 18a—18i preferably are deposited in layers on a suitable substrate, such as a VLSI silicon circuit 28, which is pressed or otherwise firmly held against the electro-optic element 17, as indicated by the arrows 29 and 30, to maintain the electrodes 18a—18i in contact with or closely adjacent to the reflecting surface 21. The advantage of this construction is that the VLSI circuit 28 may be used to make the necessary electrical connections to the electrodes 18a—18i. Alternatively, the electrodes 18a—18i could be deposited on the reflecting surface 21 of the electro-optic element 17.

For illustrative purposes, it has been assumed that the phase front of the output beam 25 is modulated in accordance with the data applied to the electrodes 18a—18i. Accordingly, Schlieren central dark field or bright field imaging optics are used to convert the spatial phase front modulation of the output beam 25 into a correspondingly modulated intensity profile and to supply any magnification that may be needed to obtain an image of the desired size on the recording medium 13. More particularly, as illustrated, there are central dark field imaging optics 31 comprising a field lens 34, a central stop 35, and an imaging lens 36. The field lens 34 is optically aligned between the output face 23 of the electro-optic element 17 and the stop 35 to focus substantially all of the zero order diffraction components of the output beam 25 onto the stop 35. However, the higher order diffraction components of the output beam 25 scatter around the stop 35 and are collected by the imaging lens 36 which, in turn, focuses them on the recording medium 13 to provide an intensity modulated image of the light valve 12.

Of course, if the input beam 24 is polarized (by means not shown), the polarization of the output beam 25 will be spatially modulated by the light valve 12 in accordance with the data applied to the electrodes 18a—18i. In that event, a polarization analyzer (also not shown) may be used to convert the spatial polarization modulation of the output beam 25 into a correspondingly modulated intensity profile. Accordingly, to generically cover the alternatives, the phase front or polarization modulation of the output beam 25 will be referred to as "p-modulation" and the read out optics 31 will be described as "p-sensitive imaging optics."

Unfortunately, there are system and elemental irregularities which tend to cause unwanted, data independent non-uniformities or irregularities in the output image of the light valve 12. For example, the laser beam 24 typically has a Gaussian energy profile, such that illumination of the light valve 12 tends to peak at or near its center and to more or less symmetrically and progressively drop off from that point outwardly toward its opposite ends. Any vignetting in the imaging optics 31 may also detract from the uniformity of such image. In addition, there are likely to be elemental variations in, say, the drive electronics for the electrodes 18a—18i or in the spacing of the electrodes 18a—18i to further detract from the uniformity of the optical output of the light valve 12.

It has been found that the exact relationship of the spatial intensity of the output beam 25 to the lengths of the electrodes 18a—18i is a complicated function of the angle of incidence of the input beam 24 on the reflecting surface 21, the cone angle with which the input beam 24 is brought to focus on the reflecting surface 21, the wavelength of the input beam 24, the spacing of the electrodes 18a—18i, and the drive voltages applied to the electrodes 18a—18i. However, once that relationship is empirically determined for any given set of conditions, its inverse may be used to adjust the lengths of the electrodes so as to obtain a more or less spatially uniform optical output from the light valve 12.

Therefore, in accordance with the present invention, as shown in Fig. 4, to obtain a more uniform optical output from the light valve 12, the lengths of the electrodes 18a—18b are selected to vary in accordance with a function which is inversely proportional to the predicted or measured, data independent variations in the optical output of the light valve 12. To the extent that such variations are predictable, the lengths of the electrodes may be appropriately controlled during the fabrication of the light valve 12, such as by photolithographically defining such electrodes 18a—18i on the metallization layer of the VLSI silicon circuit 28 to have lengths matching a predetermined compensating function. Otherwise, the data independent optical output variations of the light valve 12 are measured so that the electrodes 18a—18i may be trimmed, such as by re-etching or laser ablation, to match the required compensating function.

Turning to Figure 5, it will be seen that the electrodes 18a—18i are individually addressable. Therefore, to print an image, differentially encoded data samples for successive lines of the image are sequentially applied to the electrodes 18a—18i. To supply the differentially encoded data samples, serial input data samples representing adjacent picture elements for successive lines of an image are applied to a differential encoder 61 at a predetermined data rate. The encoder 61 differentially encodes these input samples on a line-by-line basis, and a multiplexer 62 ripples the encoded data samples onto the electrodes 18a—18i at a ripple rate which is matched to the data rate.

A controller 63 synchronizes the encoder 61 and the multiplexer 62. Of course, the input data may be buffered (by means not shown) to match the input data rate to any desired ripple rate.

As a matter of definition, each differentially encoded data sample, other than the first sample for each line of the image, has a magnitude which differs from the magnitude of the previous differentially encoded sample by an amount corresponding to the magnitude of a particular input data sample. The first differentially encoded sample for each line of the image is referenced to a predetermined potential, such as ground. Thus, when the differentially encoded data samples for any given line of an image are applied to the electrodes 18a—18i, all picture elements for that line are faithfully represented by the magnitude of the voltage drops appearing between respective pairs of neighboring electrodes. Preferably, the differentially encoded data samples are binary digital data, but analog data may also be differentially encoded for application to the electrodes 18a—18i.

It will be evident that there are many variations to the present invention. For example, the individually addressable electrodes 18a—18i may be interleaved with and referenced to ground plane electrodes (not shown), thereby avoiding the need for any differential encoding. As another example, the electrodes 18a—18i could be tilted at the Bragg angle relative to the optical axis of the light valve 12 to provide for Bragg diffraction of the output beam 25. Still another possibility is that the electrodes 18a—18i could be convergent on the entrance pupil of the imaging lens 36, thereby allowing for the use of non-telecentric imaging optics.

In view of the foregoing, it will now be understood that the present invention provides a technique for improving the spatial uniformity of the optical output of a multi-gate light valve. As will be appreciated, the electrode lengths may be selected prior to fabrication of a light valve to compensate for predictable spatial variations in the optical output of the light valve and/or may be trimmed following assembly of the light valve to compensate for spatial variations which can be determined only be empirical measurements.

**Claims**

1. A light-modulating device comprising illumination means, a multigate light valve (12) for modulating the light beam (24), and imaging optics (31) to focus an intensity-modulated image of the light valve (12) on a recording medium, the light valve including an electro-optic element (17) to which the light beam is applied by the illumination means in such a way that it passes through this element in the direction along the axis thereof and is brought to a wedge-shaped focus and internally reflected at a grazing angle of incidence on one of the surfaces (21) of the element;

a plurality of electrodes (18) intimately associated with the reflecting surface (21) of the electro-optic element, the electrodes extending lengthwise of the axis thereof, and

means (62) for applying data samples to at least every other one of the electrodes, whereby localized electric fields are created within the electro-optic element to modulate the light beam spatially in accordance with the data samples,

characterised in that the electrodes are of different effective lengths selected in accordance with a function which is inversely proportional to the predicted or measured, data-independent, spatial non-uniformity of the light intensity distribution across the image of the light valve in the uncompensated state, such that this non-uniformity is, at least partially, compensated.

2. A device as claimed in claim 1, wherein the lengths of said electrodes are preselected to compensate for predictable, data-independent, spatial energy variations in said modulated light beam.

3. A device as claimed in claim 1 or 2, wherein said electrodes are supported on a separate substrate (28) and are held closely adjacent said electro-optic element, whereby electric fringe fields are proximity coupled into said electro-optic element to modulate said light beam.

4. A device as claimed in claim 3, wherein the light beam is applied to the reflecting surface of the electro-optic element for total internal reflection therefrom;

the substrate is an integrated circuit having a metallised layer patterned to define said electrodes, and

the integrated circuit is immediately adjacent said reflecting surface to proximity-couple the fringe fields into said electro-optic element.

5. A device as claimed in any preceding claim, each of the electrodes is individually addressable:

the data samples are differentially encoded for application to the electrodes, and

the electro-optic element is an electro-optic crystal.

6. A method of manufacturing a device as claimed in any preceding claim, characterised in that

the lengths of the electrodes are trimmed afer fabrication in order to compensate for measured variations in the modulated light beam.

**Revendications**

1. Dispositif modulateur de lumière, comprenant un moyen d'éclaireage, une valve de lumière multiporte (12) pour moduler le faisceau lumineux (24), et un système optique de formation d'image (31) pour focaliser une image modulée en intensité de la valve de lumière (12) sur un milieu d'enregistrement, la valve de lumière comportant un élément électro-optique (17) auquel le faisceau lumineux est appliqué par le moyen d'éclairage de façon qu'il traverse cet élément suivant son axe et est mis à un foyer en forme de cale et soumis à une réflexion interne à un angle d'incidence rasant sur l'une des surfaces (21) de l'élément;

— une pluralité d'électrodes (18) associées intimement à la surface réfléchissante (21) de l'élément électro-optique, les électrodes s'étendant dans le sens de la longueur de l'axe; et

— un moyen (62) pour appliquer des échantillons de données à au moins une électrode sur deux, d'où la création de champs électriques localisés à l'intérieur de l'élément électro-optique pour moduler le faisceau lumineux spatialement en conformité avec les échantillons de données;

caractérisé en ce que les électrodes ont des longueurs effectives différentes qui sont choisies en conformité avec une fonction qui est inversement proportionnelle à la non-uniformité spatiale, prédite ou mesurée, indépendante des données, de la distribution de l'intensité lumineuse à travers l'image de la valve de lumière dans l'état non compensé, de sorte que cette non-uniformité est, au moins partiellement, compensée.

2. Dispositif selon la revendication 1, où

— les longueurs des électrodes sont présélectionnées de manière à compenser des variations d'énergie spatiales, prévisibles, indépendantes des données, dans le faisceau lumineux modulé.

3. Dispositif selon la revendication 1 ou la revendication 2, où

— les électrodes sont supportées sur un substrat séparé (28) et sont maintenues étroitement contiguës à l'élément électro-optique, d'où il résulte que des champs électriques marginaux sont couplés par proximité à l'élément électro-optique de manière à moduler le faisceau lumineux.

4. Dispositif selon la revendication 3, où le faisceau lumineux est appliqué à la surface réfléchissante de l'élément électro-optique pour être soumis à une réflexion interne totale par celui-ci;

— le substrat est un circuit intégré ayant une couche métallisée représentant une configuration qui permet de définir les électrodes; et

— le circuit intégré est immédiatement contigu à la surface réfléchissante pour appliquer par proximité les champs marginaux à l'élément électro-optique.

5. Dispositif selon l'une quelconque des revendications précédentes, où

— chacune des électrodes est addressable individuellement;

— les échantillons de données sont codés différentiellement pour application aux électrodes; et

— l'élément électro-optique est un cristal électro-optique.

6. Procédé de fabrication d'un dispositif selon l'une quelconque des revendications précédentes, caractérisé en ce que:

— les tronçons des électrodes sont finis après fabrication de manière à compenser les variations mesurées du faisceau lumineux modulé.

## Patentansprüche

1. Lichtmodulationseinrichtung mit einer Beleuchtungseinrichtung, einem mehrtorigen Lichtventil (12) zur Modulation des Lichtbündels (24) und einer Abbildungsoptik (31), um ein intensitätsmoduliertes Bild des Lichtventils (12) auf ein Aufzeichnungsmedium zu fokussieren, wobei das Lichtventil ein elektrooptisches Element (17) umfaßt, welchem das Lichtbündel durch die Beleuchtungseinrichtung derart zuführbar ist, daß es durch dieses Element in Richtung dessen Achse hindurchgeht und zu einer keilförmigen Fokussierung gebracht wird und innen unter einem streifenden Einfallswinkel an einer der Oberflächen (21) des Elementes reflektiert wird,

einer Vielzahl Elektroden (18), die eng mit der reflektierenden Oberfläche (22) des elektrooptischen Elementes verbunden sind, wobei sich die Elektroden in Längsrichtung dessen Achse erstrecken, und

einer Einrichtung (62) zum Anlegen von Datenproben an wenistens jede zweite der Elektroden, wodurch örtliche, elektrische Felder innerhalb des elektrooptischen Elementes erzeugbar sind, um das Lichtbündel räumlich in Übereinstimmung mit den Datenproben zu modulieren,

dadurch gekennzeichnet, daß die Elektroden unterschiedliche, wirkungsvolle Längen aufweisen, die in Übereinstimmung mit einer Funktion ausgewählt sind, die der vorausgesagten oder gemessenen, datenunabhängigen, räumlichen Ungleichförmigkeit der Lichtintensitätsverteilung über das Bild des Lichtventils in dem nichtkompensierten Zustand proportional ist, derart, daß diese Ungleichförmigkeit wenigstens teilweise ausgeglichen ist.

2. Einrichtung nach Anspruch 1, bei der die Längen der Elektroden vorausgewählt sind, voraussagbare, datenunabhängige, räumliche Energieänderungen in dem modulierten Lichtbündel auszugleichen.

3. Einrichtung nach Anspruch 1 oder 2, bei der die Elektroden von einem getrennten Substrat (28) getragen und dem elektrooptischen Element nahe benachbart gehalten sind, wodurch elektrische Streufelder auf kurze Entfernung in das elektrooptische Element koppelbar sind, um das Lichtbündel zu modulieren.

4. Einrichtung nach Anspruch 3, bei der das Lichtbündel auf die reflektierende Oberfläche des elektrooptischen Elementes zur inneren Totalreflexion von dieser angewandt ist,

das Substrat ein integrierter Schaltkreis mit einer metallischen Schicht ist, welches zum Festlegen der Elektroden gemustert ist, und

der integrierte Schaltkreise unmittelbar der reflektierenden Oberfläche benachbart ist, um auf kurze Entfernung die Streufelder in das elektrooptische Element zu koppeln.

5. Einrichtung nach einem der vorhergehenden Ansprüche,

wobei die Elektroden einzeln addressierbar sind,

die Datenproben zum Anwenden auf die Elektroden eigenrelativ codiert sind, und

das elektrooptische Element ein elektrooptischer Kristall ist.

6. Verfahren zur Herstellung einer Einrichtung nach einem der vorhergehenden Ansprüche, dadurch gekennzeichnet, daß

die Längen der Elektroden nach der Herstellung zugerichtet werden, um gemessene Veränderungen bei dem modulierten Lichtbündel auszugleichen.

0 072 124

FIG. 1

FIG. 2

FIG. 3

1

FIG. 4

FIG. 5